# EUROPÄISCHE PATENTANMELDUNG

(11) **EP 1 273 892 A1**
(43) Veröffentlichungstag der Anmeldung: **08.01.2003**
(21) Anmeldenummer: 02009744.0
(22) Anmeldetag: 30.04.2002
(51) Int. Cl.: G01F 1/60

(54) **Verfahren zum Betrieb eines magnetisch-induktiven Durchflussmessers**

(30) Priorität: 06.07.2001 EP 01116432
(71) Anmelder: Endress + Hauser Flowtec AG, CH-4153 Reinach BL 1 (CH)
(72) Erfinder: Budmiger, Thomas, 4107 Ettingen (CH)
(74) Vertreter: Andres, Angelika

(57) **Zusammenfassung**

Der Durchflußmesser umfasst einen Durchflußaufnehmer (1) mit einem Meßrohr (11), zwei Spulen (12, 13) und zwei Meßelektroden (14, 15) sowie eine Bertiebs- Auswerte-Elektronik (2). Das Verfahren dient der möglichst vollständigen Kompensation von Störpotentialen, die von induktiven und/oder kapazitiven Einstreuungen durch die Spulen-Zuleitungen und/oder von Fremdstoff-Partikeln bzw. Luftbläschen in der zu messenden Flüssigkeit und/oder von Belägen auf den Meßelektroden (14, 15) verursacht werden. In den Teil-Periodendauern (T111, T121, T211, T221) des Erregerstroms wird wie üblich das dem Volumendurchfluss proportionale Messsignal (d) berechnet. Einer der Meßelektroden (14, 15) wird in den Teil-Periodendauern (T112, T122, T212, T222, T312) des Erregerstroms mindestens ein Spannungs-Impuls (E112, E122, E212, E222, E312; E112', E212', E312') zugeführt.

## Beschreibung

Die Erfindung betrifft ein Verfahren zum Betrieb eines magnetisch-induktiven Durchflußmessers, mit dem der Volumen-Durchfluß einer elektrisch leitenden und strömenden Flüssigkeit zu messen ist.

Magnetisch-induktive Durchflußmesser umfassen üblicherweise einen Durchflußaufnehmer und eine mit diesem gekoppelte Meß- und Betriebs-Elektronik. Im Folgenden wird, falls nötig, der Einfachheit halber nur von Durchflußaufnehmern bzw. Durchflußmessern gesprochen.

Mit magnetisch-induktiven Durchflußmessern läßt sich bekanntlich der Volumen-Durchfluß einer elektrisch leitenden Flüssigkeit messen, die in einer Rohrleitung fließt; es wird also per definitionem das pro Zeiteinheit durch einen Rohrquerschnitt fließende Volumen der Flüssigkeit gemessen.

Der Durchflußaufnehmer hat ein, üblicherweise nicht-ferromagnetisches, Meßrohr, das in die Rohrleitung flüssigkeitsdicht, z.B. mittels Flanschen oder Verschraubungen, eingesetzt wird. Der die Flüssigkeit berührende Teil des Meßrohrs ist i.a. elektrisch nicht-leitend, damit eine Spannung nicht kurzgeschlossen wird, die nach dem Faraday'schen Induktionsgesetz von einem das Meßrohr durchsetzenden Magnetfeld in der Flüssigkeit induziert wird.

Metall-Meßrohre sind daher üblicherweise innen mit einer elektrisch nicht-leitenden Schicht, z.B. aus Hartgummi, Polyfluorethylen etc., versehen und auch i.a. nicht-ferromagnetisch; bei vollständig aus einem Kunststoff oder aus einer Keramik, insb. aus Aluminiumoxid-Keramik, bestehenden Meßrohren ist die elektrisch nicht-leitende Schicht demgegenüber nicht erforderlich.

Das Magnetfeld wird mittels zweier Spulenanordnungen erzeugt, von denen im häufigsten Fall jede auf einem gedachten Durchmesser des Meßrohrs von außen an diesem angeordnet ist. Jede Spulenanordnung besteht üblicherweise aus einer Spule ohne Kern oder einer Spule mit einem weichmagnetischen Kern.

Damit das von den Spulen erzeugte Magnetfeld möglichst homogen ist, sind sie im häufigsten und einfachsten Fall identisch zueinander und elektrisch gleichsinnig in Serie geschaltet, sodass sie im Betrieb von demselben Erregerstrom durchflossen werden können. Es ist jedoch auch schon beschrieben worden, die Spulen abwechselnd gleich- bzw. gegensinnig vom selben Erregerstrom durchfließen zu lassen, vgl. die US-A 56 46 353, um dadurch die Viskosität nicht-newton'scher Flüssigkeiten - das sind Flüssigkeiten mit hoher Viskosität - messen zu können.

Der eben erwähnte Erregerstrom wird von einer Betriebs-Elektronik erzeugt; er wird auf einen konstanten Stromwert von z.B. 85 mA geregelt, und seine Stromrichtung wird periodisch umgekehrt; dies verhindert, dass sich an den Meßelektroden elektrochemische Störspannungen aufbauen. Die Stromrichtungsumkehr wird dadurch erreicht, dass die Spulen in einer sogenannten T-Schaltung oder einer sogenannten H-Schaltung liegen; zur Stromregelung und -richtungsumkehr vgl. die US-A 44 10 926 oder die US-A 60 31 740.

Die erwähnte induzierte Spannung entsteht zwischen mindestens zwei galvanischen, also von der Flüssigkeit benetzten, oder zwischen mindestens zwei kapazitiven, also z.B. innerhalb der Rohrwand des Meßrohrs angeordneten, Meßelektroden, wobei jede der Elektroden für sich ein Potential abgreift.

Im häufigsten Fall sind die Meßelektroden diametral einander gegenüberliegend so angeordnet, dass ihr gemeinsamer Durchmesser senkrecht zur Richtung des Magnetfelds und somit senkrecht zum Durchmesser ist, auf dem die Spulenanordnungen liegen. Die induzierte Spannung wird verstärkt und mittels einer Auswerte-Elektronik zu einem Messsignal aufbereitet, das registriert, angezeigt oder seinerseits weiterverarbeitet wird.

Das Potential an jeder Elektrode ist nicht nur vom Magnetfeld aufgrund des Faraday-Gesetzes abhängig - in diese Abhängigkeit gehen die geometrisch/räumlichen Abmessungen des Meßrohrs und die Eigenschaften der Flüssigkeit ein -, sondern diesem auf dem Faraday-Gesetz beruhenden und als möglichst rein erwünschten Nutz-Messsignal sind Störpotentiale verschiedener Genese überlagert.

Im Prinzip ist der Absolutwert des Potentials an der jeweiligen Elektrode für die Messung des Volumen-Durchflusses ohne Bedeutung, allerdings nur unter der Voraussetzung, dass einerseits die Potentiale im Aussteuerbereich eines auf die Meßelektroden folgenden Differenzverstärkers liegen, d.h. also dass dieser Verstärker von den Potentialen nicht übersteuert werden darf, und dass andererseits sich die Frequenz von Potentialänderungen wesentlich von der Frequenz der erwähnten Stromrichtungsumkehr unterscheidet.

Eine erste Art von Störpotentialen stammt von induktiven und/oder kapazitiven Einstreuungen, die von den Spulenanordnungen und deren Zuleitungen ausgehen und die elektrische Ladung desjenigen Kondensators ändern, der an der Grenzschicht zwischen der Elektrode und der Flüssigkeit existiert. Aufgrund von Unsymmetrien im konkreten Aufbau des Durchflußaufnehmers, insb. was die Leitungsführung zu den Spulenanordnungen und den Meßelektroden angeht, weicht i.a. das Störpotential der einen Elektrode vom Störpotential der anderen Elektrode ab.

Dieser - erste - Effekt kann einerseits zu einer Begrenzung der Dynamik des erwähnten Differenzverstärkers führen. Andererseits unterliegt der Wert der vom Störpotential jeder Elektrode bedingten Störpotentialdifferenz Exemplarstreuungen aufgrund von Fertigungstoleranzen der Durchflußaufnehmer. Auch ist die feststellbare Abhängigkeit der Potentiale der Meßelektroden von der Geschwindigkeit der Flüssigkeit zum Teil auf diesen Effekt zurückzuführen, da bei kleinen Geschwindigkeiten die erwähnten Ladungen an der Grenzschicht zwischen Elektrode und Flüssigkeit von dieser nicht ausgeräumt werden.

Eine zweite Art von Störpotentialen stammt von Partikeln eines Fremdstoffs oder von Luftbläschen, die von der Flüssigkeit mitgeführt werden und die, wenn sie auf eine Elektrode auftreffen, plötzliche Änderungen von deren Potential bewirken. Die Abklingzeit dieser Änderungen ist von der Art der Flüssigkeit abhängig und auf jeden Fall größer als die Anstiegszeit der Änderungen.

Auch dieser - zweite - Effekt führt zu einem gestörten Nutz-Messsignal. Der dadurch bedingte Fehler ist zudem vom Potential der Elektrode abhängig. Da dieses aber - wie oben schon erläutert wurde - Exemplarstreuungen aufweist, tritt der zweite Effekt zum ersten Effekt hinzu, sodass die einzelnen Exemplare des Durchflußaufnehmers sehr unterschiedliches Verhalten zeigen, was natürlich äußerst unerwünscht ist.

Eine dritte Art von Störpotentialen ist, wie z.B. auch in der US-A 52 10 496 beschrieben, durch Beläge auf den Meßelektroden bedingt, die von der Flüssigkeit dort ablagert werden. Die Bildung der Beläge ist sehr stark von der Geschwindigkeit der Flüssigkeit abhängig. Die Unterschiede im Verhalten der einzelnen Exemplare der Durchflußaufnehmer werden durch die Belagsbildung noch weiter vergrößert.

In der JP-A 10-213 466 wird vorgeschlagen, innerhalb eines Zeitraums, in dem der Erregerstrom nicht fließt und in dem somit auch keine Spannung im Fluid induziert wird, an wenigstens eine der beiden Meßelektroden mittels der Meßund Betriebsschaltung erzeugte Spannungen zumindest zeitweise angelegt werden. Bei dem in der JP-A 10-213 466 beschriebenen Durchflußmesser dient die temporär angelegte Spannung dazu, die an den Meßelektroden aufgebauten Grenzschichtkapazitäten auszumessen und zu bewerten, praktisch also dazu, Störpotentiale der ersten und/oder der dritten Art zu kompensieren.

Ein Nachteil der vorbeschriebenen Durchflußaufnehmer besteht aber darin, daß der Durchfluß aufgrund des zwischenzeitlichen Abschaltens des Erregerstroms vergleichsweise nur sehr grob abgetastet werden kann.

Es ist eine Aufgabe der Erfindung, ein Verfahren anzugeben, mit dem die erwähnten Störpotentiale möglichst wirkungsvoll verhindert oder zumindest weitgehend kompensiert werden können und das gleichzeitig ein hochauflösendes Abtasten des Durchflusses ermöglicht.

Zur Lösung dieser Aufgabe besteht die Erfindung in einem Verfahren zum Betreiben eines magnetisch-induktiven Durchflußmessers mit einem Meßrohr, das in eine von einem Fluid durchströmte Leitung eingesetzt ist, welches Verfahren folgende Schritte umfaßt:
- Strömenlassen des Fluids durch das Meßrohr,
- Fließenlassen eines mittels einer Meß- und Betriebsschaltung des Durchflußmessers erzeugten, insb. bi-polaren, Erregerstroms durch eine am Meßrohr angeordnete Spulenanordnung zum Erzeugen eines das Fluid durchsetzenden Magnetfelds,
- Induzieren einer Spannung im strömenden Fluid zum Verändern von an am Meßrohr angeordneten Meßelektroden angelegten Potentialen sowie
- Abführen von den Meßelektroden angelegten Potentialen zum Erzeugen eines von der im strömenden Fluid induzierten Spannung abgeleiteten Meßsignals,
- wobei während des Fließenlassens des Erregerstroms durch die Spulenanordnung wenigstens eine der Meßelektroden zumindest zeitweise mit einer von der Meß- und Betriebsschaltung erzeugten Entladespannung beaufschlagt wird.

Des weiteren besteht die Erfindung in einem magnetisch-induktiver Durchflußmesser für ein in einer Leitung strömendes Fluid, der umfaßt:
- ein in die Leitung einfügbares Meßrohr zum Führen des Fluids,
- eine Meß- und Betriebsschaltung,
- von der Meß- und Betriebsschaltung gespeiste Mittel zum Erzeugen eines das Meßrohr durchsetzenden Magnetfelds mit einer am Meßrohr angeordneten und von einem Erregerstrom durchflossenen Spulenanordnung,
- wenigstens zwei Meßelektroden zum Abgreifen von Potentialen, die im durch das Meßrohr strömenden und vom Magnetfeld durchsetzten Fluid induziert sind,
- zumindest zeitweise mit den Meßelektroden verbundene Mittel zum Erzeugen wenigstens eines von den im Fluid induzierten Potentialen abgleiteten Meßsignals sowie
- von der Meß- und Betriebsschaltung gesteuerte Mittel zum Erzeugen von Spannungs-Impulsen an den Meßelektroden,
   -- wobei die Mittel zum Erzeugen von Spannungs-Impulsen derart gesteuert sind, daß die Spannungs-Impulse den Meßelektroden bei von Null verschiedenem Erregerstrom angelegt sind.

Nach einer bevorzugten ersten Ausgestaltung des Verfahrens der Erfindung ist die Entladespannung eine zumindest zeitweise periodische Folge von Spannungs-Impulsen.

Nach einer bevorzugten zweiten Ausgestaltung des Verfahrens der Erfindung ist der Erregerstrom zumindest zeitweise mit einer vorgebbaren Periodendauer ebenfalls periodisch getaktet, wobei die Periodendauer des getakteten Erregerstroms von einer Periodendauer der Folge von Spannungs-Impulsen im wesentlichen verschieden ist.

Nach einer bevorzugten dritten Ausgestaltung des Verfahrens der Erfindung ist die Periodendauer des getakteten Erregerstroms größer als die Periodendauer der Folge von Spannungs-Impulsen.

Nach einer bevorzugten vierten Ausgestaltung des Verfahrens der Erfindung weisen zwei aufeinanderfolgende Spannungs-Impulse einander gleiche Polaritäten auf.

Nach einer bevorzugten fünften Ausgestaltung des Verfahrens der Erfindung weisen zwei aufeinanderfolgende Spannungs-Impulse zueinander verschiedene Polaritäten auf.

Nach einer bevorzugten sechsten Ausgestaltung des Verfahrens der Erfindung ist die Spannungs-Impulse eine Pulsbreite aufweisen, die wesentlich kleiner als eine Pulsbreite des Erregerstroms.

Nach einer bevorzugten siebenten Ausgestaltung des Verfahrens der Erfindung werden beiden Meßelektroden jeweils zeitweise Spannungs-Impulse aufgeschaltet.

Ein Grundgedanke der Erfindung besteht darin, durch ein wiederholtes, insb. möglichst hochfrequent getaktetes, Anlegen der Entladespannung einerseits und durch das ständige Wechseln der Polarität der Entladespannung andererseits Störpotentiale der beschriebenen Arten weitgehend zu verhindern oder zu kompensieren und trotz dieses Entladevorganges, abgesehen von den üblichen, der Umpolung des Magnetfelds geschuldeten Verringerung in der Meßdynamik, möglichst keine Verminderung der Abtasthäufigkeit für die im Fluid induzierte Meßspannung in Kauf nehmen zu müssen. Ein weiterer Grundgedanke der Erfindung ist es, den Meßelektroden die Entladespannung mit einer im Vergleich zur Änderungsrate der Störpotentiale höheren Änderungsrate, also höheren Wiederholfrequenz, anzulegen und somit im zeitlichen Mittel eine weitgehend gleichmäßige Beladung der Grenzschicht - und/oder Streukapazitäten zu bewirken.

Ein Vorteil der Erfindung besteht darin, dass sowohl die auf den induktiv/kapazitiven Einstreuungen als auch auf den von der Flüssigkeit mitgeführten Fremdstoff-Partikeln und/oder Luftbläschen als auch die auf der Bildung von Meßelektroden-Belägen beruhenden Störpotentiale gezielt vermindert oder sogar vollständig kompensiert werden können, sodaß die breite Streuung der Fertigungstoleranzen ebenfalls minimiert und Durchflußaufnehmer mit von Exemplar zu Exemplar einheitlichem Verhalten hergestellt werden können. Ein weiterer Vorteil der Erfindung ist darin zu sehen, daß trotz der an den Meßelektroden initierten Entladevorgänge der zu messenden Durchfluß mit einer mit herkömmlichen Durchflußmessern vergleichbar hohen Auflösung erfaßt werden kann.

Das Verfahren der Erfindung und weitere Vorteile werden nun anhand von in den Figuren der Zeichnung dargestellten Zeitdiagrammen und schematisierten Schaltbildern eines magnetisch-induktiven Durchflußmessers näher erläutert.
- Fig. 1: zeigt schematisch und teilweise in der Form eines Blockschaltbilds einen für den Ablauf des Verfahrens der Erfindung geeigneten magnetisch-induktiven Durchflußmesser,
- Fig. 2a: zeigt ein Zeitdiagramm des periodisch umgeschalteten und zu unterschiedlichen Phasen in den Spulen fließenden Erregerstroms,
- Fig. 2b: zeigt ein Zeitdiagramm des vom Erregerstrom nach Fig. 2 induzierten Potentials an einer der beiden Meßelektroden mit mehreren dieser Elektrode nach einer Ausgestaltung des Verfahrens der Erfindung zugeführten Doppel-Spannungs-Impulsen der einen Polarität, gefolgt von Doppel-Spannungs-Impulsen der anderen Polarität, und
- Fig. 2c: zeigt ein Zeitdiagramm des vom Erregerstrom nach Fig. 2 induzierten Potentials an einer der beiden Meßelektroden mit mehreren dieser Elektrode nach einer anderen Ausgestaltung des Verfahrens der Erfindung zugeführten Einfach-Spannungs-Impulsen der einen Polarität, gefolgt von Einfach-Spannungs-Impulsen der anderen Polarität.

Der Durchflußaufmesser, mit dem das Verfahren der Erfindung ausgeführt werden kann, umfasst einen Durchflußaufnehmer 1 und eine Meß- und Betriebsschaltung. Zum Durchflußaufnehmer 1 gehört ein Meßrohr 11, das eine Rohrwand aufweist und durch das im Betrieb in Richtung einer Meßrorhlängsachse die zu messende, leitende Flüssigkeit strömt.

Zur Vermeidung eines Kurzschließens von im Fluid induzierten Spannungen ist ein die Flüssigkeit berührendes Innenteil des Meßrohrs 11 elektrisch nicht-leitend ausgeführt. Metall-Meßrohre sind dafür üblicherweise innen mit einer elektrisch nicht-leitenden Schicht, z.B. aus Hartgummi, Polyfluorethylen etc., versehen und auch i.a. nicht-ferromagnetisch; bei vollständig aus einem Kunststoff oder aus einer Keramik, insb. aus Aluminiumoxid-Keramik, bestehenden Meßrohren ist die elektrisch nichtleitende Schicht demgegenüber nicht erforderlich.

Eine Spulenanordnung des Durchflußaufnehmers 1 weist eine am Meßrohr 11 angeordnete erste Feldspule 12 und eine am Meßrohr 11 angeordnete zweite Feldspule 13 auf. Die Feldspulen 12, 13 liegen auf einem ersten Durchmesser des Meßrohrs 11. Die Spulenanordnung dient im Betrieb der Erzeugung eines die Rohrwand und die Flüssigkeit durchsetzenden Magnetfelds H. Dieses entsteht, wenn in den, hier in Reihe geschalteten, Feldspulen 12, 13 ein Erregerstrom I fließen gelassen wird. Der bevorzugt bi-polare Erregerstrom I kann hierbei z.B. rechteck-, dreieck- oder sinus-förmig sein.

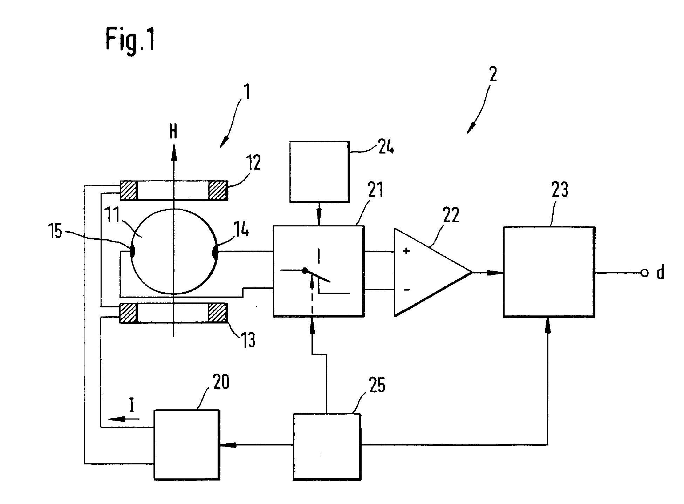

In Fig. 1 ist gezeigt, daß die Feldspulen 12, 13 keinen Kern enthalten, also sogenannte Luftspulen sind. Die Feldspulen 12, 13 können jedoch auch, wie bei derartigen Spulenanordnungen üblich, um einen Kern gewickelt sein, der i.a. weichmagnetisch ist, wobei die Kerne mit Polschuhen zusammenwirken können, vgl. z.B. die US-A 55 40 103.

Die Spulenanordnung ist bevorzugt so ausgeführt, insb. sind die beiden Feldspulen 12, 13 so geformt und dimensioniert, daß das damit erzeugte Magnetfeld H innerhalb des Meßrohrs 11 zumindest bezüglich eines zum ersten Durchmesser senkrechten zweiten Durchmessers symmetrisch, insb. rotationssymmetrisch, ausgebildet ist.

Wie in der Fig. 1 gezeigt, wird der der Erzeugung des Magnetfelds H dienende Erregerstrom I von einem entsprechenden Erregerstromgenerator 20 erzeugt. Bevorzugt wird dazu im Erregerstromgenerator 20 ein von einer Gleichstromquelle getriebener, insb. auf konstante Amplitude geregelter, Gleichstrom mittels eines Umpolers periodisch umgeschaltet und an die Spulenanordnung angelegt, und zwar so, daß die Spulen 12, 13 während einer ersten Phase PH11 jeweils in einer ersten Stromrichtung und während einer auf die erste Phase folgenden zweiten Phase PH12 jeweils in einer zur ersten Stromrichtung umgekehrten Gegenrichtung durchflossen sind, vgl. zu Stromregelung und -umpolung z.B. auch die US-A 44 10 926 oder die US-A 60 31 740.

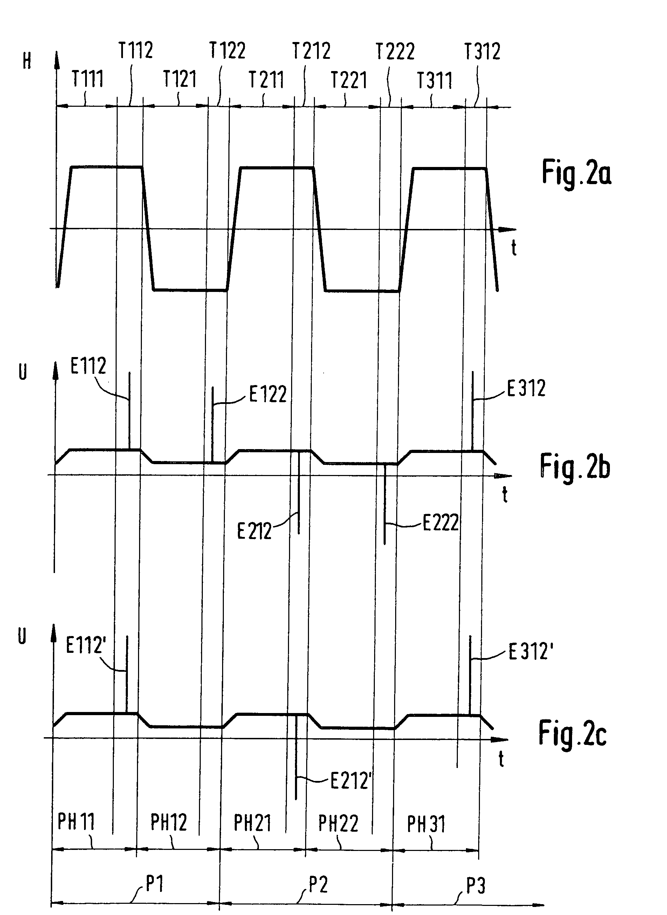

Auf die zweite Phase PH12 folgt eine dritte Phase PH21, während der der Erregerstrom I wieder in der ersten Stromrichtung fließt. Auf die dritte Phase folgt eine vierte Phase PH22, während der der Erregerstrom I wieder in der Gegenrichtung fließt. Darauf folgt eine entsprechende Phase PH31 u.s.w. Bezüglich der Umkehrung der Richtung des Erregerstroms I bilden jeweils zwei der aufeinanderfolgenden Phasen eine Umschaltperiode P1, P2, P3 u.s.w. Einhergehend mit der Umpolung des die Spulenanordnung durchfließenden Erregerstroms I, abgesehen von einer allfälligen Phasenverschiebung im wesentlichen synchron dazu wird auch das Magnetfeld H wiederholt umgepolt, vgl. hierzu Fig. 2a.

Eine an einer Innenseite der Rohrwand des Meßrohrs 11 angeordnete erste Elektrode 14 dient dem Abgriff eines vom Magnetfeld H induzierten ersten Potentials. Eine in der gleichen Weise angeordnete zweite Elektrode 15 dient dem Abgriff eines vom Magnetfeld induzierten zweiten Potentials. Die Meßelektroden 14, 15 liegen auf dem zum ersten Durchmesser und zur Meßrohlängsachse senkrechten zweiten Durchmesser des Meßrohrs 11, sie können aber z.B. auch auf einer zum zweiten Durchmesser parallelen Sehne des Meßrohrs 11 liegen, vgl. hierzu auch die US-A 56 46 353.

In Fig. 1 sind die Meßelektroden 14, 15 galvanische Meßelektroden, die also die Flüssigkeit berühren. Es können jedoch auch zwei kapazitive, also z.B. innerhalb der Rohrwand des Meßrohrs 11 angeordnete, Meßelektroden verwendet werden. Jede Elektrode greift für sich ein elektrisches Potential ab, das im Betrieb aufgrund des Faraday-Gesetzes in der Flüssigkeit induziert wird.

Die Meß- und Betriebs-Elektronik 2 umfasst einen Umschalter, der für jede Elektrode einen Umschalt-Kontaktsatz haben muss. Da In Fig. 2 zwei Meßelektroden 14, 15 vorhanden sind hat der entsprechende Umschalter 21 zwei Umschalt-Kontaktsätze, die allerdings nicht einzeln dargestellt, sondern lediglich mittels des Umschalter-Symbols wiedergegeben sind.

In der in Fig. 1 eingezeichneten Stellung des Umschalters 21 sind die Meßelektroden 14, 15 mit einem invertierenden bzw. nicht-invertierenden Eingang eines Differenzverstärkers 22 verbunden. Somit wird die Differenz der beiden von den Meßelektroden 14, 15 abgegriffenen Potentiale gebildet. Aus dieser Differenz berechnet eine Auswerte-Elektronik 23 in üblicher Weise, z.B. durch periodische Abtastung und Zwischenspeicherung - vgl. z.B. die US-A 43 82 387, die US-A 44 22 337 oder die US-A 47 04 908, ein dem Volumendurchfluss der Flüssigkeit proportionales Messsignal d.

Die in Fig. 1 eingezeichnete Stellung des Umschalters 21 ist immer während einer ersten Teil-Periodendauer T111 der ersten Phase PH11 des Erregerstroms I, während einer ersten Teil-Periodendauer T121 der zweiten Phase PH12 des Erregerstroms I, während einer ersten Teil-Periodendauer T211 der dritten Phase PH21 des Erregerstroms I, während einer ersten Teil-Periodendauer T221 der vierten Phase PH22 des Erregerstroms I und während einer ersten Teil-Periodendauer T311 einer fünften Phase PH31 des Erregerstroms I vorhanden, vgl. die Fig. 2a und 2c.

Die Steuerung des Umschalters 21 nimmt eine Ablaufsteuerung 25 vor; einer ihrer Ausgänge ist mit dem Steuer-Eingang des Umschalters 21 verbunden. Ein weiterer Ausgang des Umschalters 21 ist mit einem Steuer-Eingang des Erregerstromgenerators 20 verbunden und noch ein weiterer Ausgang mit der Auswerte-Elektronik 23. Zur Ablaufsteuerung 25 gehört ein Taktgenerator.

In der in Fig. 1 nicht eingezeichneten, anderen Stellung des Umschalters 21 ist mindestens eine der beiden Meßelektroden 14, 15 mit einem Impuls-Generator 24 verbunden. Diese andere Stellung des Umschalters 21 ist während einer zweiten Teil-Periodendauer T112, T122, T212, T222, T312 mindestens einer der Phasen PH11, PH12, PH21, PH22, PH31 des Erregerstroms I vorhanden, sodaß mindestens einer der beiden Meßelektroden 14, 15 zumindestens zeitweise, insb. periodisch wiederkehrend, eine Entladespannung E bei gleichzeitig fließengelassenem Erregerstrom I angelegt ist. Die mittels der vorzugsweise inform einer Folge von Spannungs-Impulsen ausgeprägten Entladespannung E verschobenen Ladungen dienen dazu, allfällige Grenzschichten an den Meßelektroden 14, 15 möglichst gleichmäßig aufzuladen und/oder allfällig an der Elektrode haftende Störpotentiale zumindest teilweise zu kompensieren.

Zum Anlegen der Entladespannung E an die betroffene Elektrode 14 bzw. 15 gehört im Sinne der Erfindung auch, dass die jeweilige Elektrode an einen Schaltungsnullpunkt des Durchflußaufmessers, insb. an einen Schaltungsnullpunkt des Durchflußaufnehmers 1, gelegt wird. Oder mit anderen Worten: Das Ändern einer Ladung an der betroffenen Elektrode umfasst auch, dass von der Elektrode Ladung abgeführt wird. Dabei kann eine Dauer mit der die Entladespannung wirksam ist, in der also in obigem Sinne Ladung von oder zu den Meßelektroden transportiert wird, im Vergleich zur zweiten Teil-Periodendauer wie dargestellt sehr kurz, maximal aber auch so lang wie diese Teil-Periodendauer sein.

In Fig. 2b ist beispielhaft eine der vielen Möglichkeiten der zeitlichen Abfolge des bevorzugt eher kurzzeitigen Anlegens der Entladespannung an eine der Meßelektroden 14, 15 dargestellt. In den Teil-Periodendauern T112, T122, T312 wird eine jeweilis positiver Spannungs-Impuls E112, E122, E312 angelegt. In den Teil-Periodendauern T212, T222 wird ein jeweiligs negativer Spannungs-Impuls E212, E222 angelegt.

Die beiden während der Umschaltperiode P1 angelegten positiven Spannungs-Impulse E112, E122 und die beiden während der Umschaltperiode P2 angelegten negativen Spannungs-Impulse E212, E222, die also jeweils während der beiden einander entgegengesetzten Stromrichtungen des Erregerstrom I einwirken, stellen einen jeweiligen Doppel-Spannungs-Impuls dar.

In Fig. 2c ist eine andere der Möglichkeiten der zeitlichen Abfolge des Anlegens der Entladespannung E an wenigstens eine der Meßelektroden 14, 15 beispielhaft dargestellt. In den Teil-Periodendauern T112, T312 wird ein jeweils positiver Spannungs-Impuls E112', E312' zugeführt. In der Teil-Periodendauer T212 wird ein negativer Spannungs-Impuls E212' zugeführt. In Fig. 2c wird nur während der einen Stromrichtung des Erregerstroms I abwechselnd ein positiver und ein negativer Spannungs-Impuls zugeführt.

Es liegt im Rahmen der Erfindung, jede beliebige Kombination der Aufeinanderfolge positiver und/oder negativer Entladespannungen anzuwenden. So können je nach Bedarf auch weniger Spannungs-Impulse, als in den Fig. 2b und 2c dargestellt ist zugeführt werden. Weniger bedeutet, dass z.B. nur in jeder fünften oder zehnten Umschaltperiode des Erregerstroms I ein Spannungs-Impuls zugeführt wird.

In den Fig. 2b und 2c sind die Spannungs-Impulse zwar als Nadelimpulse von im Vergleich zu einer Pulsbreite des Erregerstroms I sehr geringer Pulsbreite dargestellt; die Spannungs-Impulse können aber beispielsweise auch rechteck-, dreieck-, trapez- oder sinus-förmig sein. Ferner brauchen die Spannungs-Impulse nicht wie dargestellt dauernd von gleicher Amplitude zu sein, vielmehr kann diese von Spannungs-Impuls zu Spannungs-Impuls variieren. Auch die Periodendauer der Spannungs-Impulse braucht nicht konstant zu sein, sondern kann veränderlich sein, wobei sie natürlich höchstens so groß wie die zweite Teil-Periodendauer sein darf.

Der Impuls-Generator 24 ist bevorzugt eine einseitig an einem Schaltungsnullpunkt liegende elektrische Gleichenergiequelle, die kurzzeitig mittels des Umschalters 21 zur entsprechenden Elektrode 14 bzw. 15 durchverbunden wird. Die Gleichenergiequelle ist bevorzugt eine Gleichstromquelle mit möglichst großem Innenwiderstand.

In den Fig. 2b und 2c ist demgegenüber vorausgesetzt, dass die Gleichenergiequelle als eine einseitig an einem Schaltungsnullpunkt liegende Gleichspannungsquelle mit möglichst kleinem Innenwiderstand ausgebildet ist. In diesem Fall ergibt sich die besonders einfache Möglichkeit, anstatt einer separaten Gleichspannungsquelle die Versorgungsspannungsquelle der Meßund Betriebs-Elektronik 2 zu verwenden; auf eine separate Gleichspannungsquelle kann dann also verzichtet werden.

## Patentansprüche

1. Verfahren zum Betreiben eines magnetisch-induktiven Durchflußmessers mit einem Meßrohr, das in eine von einem Fluid durchströmte Leitung eingesetzt ist, welches Verfahren folgende Schritte umfaßt:
- Strömenlassen des Fluids durch das Meßrohr,
- Fließenlassen eines mittels einer Meß- und Betriebsschaltung des Durchflußmessers erzeugten, insb. bi-polaren, Erregerstroms durch eine am Meßrohr angeordnete Spulenanordnung zum Erzeugen eines das Fluid durchsetzenden Magnetfelds,
- Induzieren einer Spannung im strömenden Fluid zum Verändern von an am Meßrohr angeordneten Meßelektroden angelegten Potentialen sowie
- Abführen von den Meßelektroden angelegten Potentialen zum Erzeugen eines von der im strömenden Fluid induzierten Spannung abgeleiteten Meßsignals,
- wobei während des Fließenlassens des Erregerstroms durch die Spulenanordnung wenigstens eine der Meßelektroden zumindest zeitweise mit einer von der Meß- und Betriebsschaltung erzeugten Entladespannung beaufschlagt wird.

2. Verfahren nach Anspruch 1, bei dem die Entladespannung eine zumindest zeitweise periodische Folge von Spannungs-Impulsen ist.

3. Verfahren nach Anspruch 2, bei dem der Erregerstrom zumindest zeitweise mit einer vorgebbaren Periodendauer ebenfalls periodisch getaktet ist, wobei die Periodendauer des getakteten Erregerstroms von einer Periodendauer der Folge von Spannungs-Impulsen im wesentlichen verschieden ist.

4. Verfahren nach Anspruch 3, bei dem die Periodendauer des getakteten Erregerstroms größer als die Periodendauer der Folge von Spannungs-Impulsen ist.

5. Verfahren nach einem der Ansprüche 1 bis 4, bei dem zwei aufeinanderfolgende Spannungs-Impulse einander gleiche Polaritäten aufweisen.

6. Verfahren nach einem der Ansprüche 1 bis 5, bei dem zwei aufeinanderfolgende Spannungs-Impulse zueinander verschiedene Polaritäten aufweisen.

7. Verfahren nach einem der Ansprüche 1 bis 5, bei dem die Spannungs-Impulse eine Pulsbreite aufweisen, die wesentlich kleiner als eine Pulsbreite des Erregerstroms ist.

8. Verfahren nach einem der Ansprüche 1 bis 7, bei dem beiden Meßelektroden jeweils zeitweise Spannungs-Impulse aufgeschaltet werden.

9. Magnetisch-induktiver Durchflußmesser für ein in einer Leitung strömendes Fluid, der umfaßt:
- ein in die Leitung einfügbares Meßrohr zum Führen des Fluids,
- eine Meß- und Betriebsschaltung,
- von der Meß- und Betriebsschaltung gespeiste Mittel zum Erzeugen eines das Meßrohr durchsetzenden Magnetfelds mit einer am Meßrohr angeordneten und von einem Erregerstrom durchflossenen Spulenanordnung,
- wenigstens zwei Meßelektroden zum Abgreifen von Potentialen, die im durch das Meßrohr strömenden und vom Magnetfeld durchsetzten Fluid induziert sind,
- zumindest zeitweise mit den Meßelektroden verbundene Mittel zum Erzeugen wenigstens eines von den im Fluid induzierten Potentialen abgleiteten Meßsignals sowie
- von der Meß- und Betriebsschaltung gesteuerte Mittel zum Erzeugen von Spannungs-Impulsen an den Meßelektroden,
-- wobei die Mittel zum Erzeugen von Spannungs-Impulsen derart gesteuert sind, daß die Spannungs-Impulse den Meßelektroden bei von Null verschiedenem Erregerstrom angelegt sind.
